# EUROPEAN PATENT SPECIFICATION

(11) **EP 1 552 738 B1**
(45) Date of publication and mention of the grant of the patent: **15.07.2009**
(21) Application number: 04030944.5
(22) Date of filing: 29.12.2004
(51) Int. Cl.: A01K 1/00

(54) **Arrangement for breeding large herds of free-range animals in stables**
Einrichtung zum Züchten von grossen Herden von freilaufenden Tieren in Ställen
Arrangement pour élever de grands troupeaux d'animaux en stabulation libre

(30) Priority: 29.12.2003 DK 200301930
(43) Date of publication of application: 13.07.2005
(73) Proprietor: Kristoffer Larsen Innovation A/S, 8721 Daugard (DK)
(72) Inventor: Larsen, Jesper Kristoffer, 8721 Daugard (DK)

(56) References cited:
- EP-A- 1 195 086
- WO-A-03/079799
- DE-A1- 3 701 864
- FR-A- 2 833 806
- US-A- 3 908 599
- US-A- 5 799 615
- US-B1- 6 342 839

## Description

This invention relates to an arrangement for breeding of animals in a herd.

DE 3701864 A1 (BUSCHHOFF) describes a system for individual feeding of free-range sows. The sows live in a herd in a free area from which they can enter a weighing-/identification room through a gate. When a sow has been identified and weighed it can be lead back to the free area or to a feeding box. In this box the sow receives an amount of feed determined from its identity/weight. From the feeding box the sow is lead back to the free area. If a sow for some reason is requested to be separated from the herd access to the feeding box is denied and the sow is lead to a separation compartment.

The arrangement according to the present invention comprises equipment which can insure that all animals, especially pigs or cows, regularly come into the individual and automatically weighing and separation equipment. The separation equipment automatically may separate the animals for slaughtering or other reasons for separations to equipment where the animals are delivered mechanically and are led to a delivery or receiving room where they are divided mechanically into smaller spaces containing one or several animals. Furthermore, a mechanical solution may be established which brings the animals from the exit of the separation room to the entrance of a vehicle.

When automatically and individually weighing equipment is used for herds with 20 to several thousands of animals, where the animals are fed after weighing, some animals will skip eating for one or several days. This is disadvantageous for production economy but also ethically - according to the Danish legislation for protection of animals, the farmer is obliged to ensure that all animals receive a daily ration of feed. It is very difficult to manually locate these animals and lead them to the automatically weighing equipment. It is becoming critical when the animal has not been fed in the equipment within the last 2 or 3 days, and it is practically nearly impossible to manually locate these animals in a herd of e.g. 900 animals of different sizes. Even though the farmer can see the tag number on the animals, which have not used the equipment in the period, it is still hard to discern the animal and physically lead it to the feeding or weighing equipment. Another important operation is during the period when the pigs are being delivered for slaughtering, the equipment selects a number of animals for separation. According to conventional method the separation begins up to 24 hrs. before they the selected animals are collected which is a very long waiting period for the animals under stress and as a result causes decreasing meat quality. If we as desired with this invention can start the equipment, which drives the animals up to and through the separation equipment 4 to 4½ hrs. before delivery and thereby ensuring that the animals are ready to go we will save a lot of stress and work resources not to mention providing a substantially improved working environment.

When the animals are separated e.g. for slaughtering or sale, the process demanding a lot of hard manual work and causing stress to the animals is eliminated if a mechanically method to lead the animal from the separation equipment in or adjacent to the stable and to the delivery room. Here the animals are placed in smaller or larger groups, which are mechanically divided, from one to all animals but normally in groups of e.g. 15 to 20 per compartment. These compartment detachments can mechanically be moved from one position to another with or without animals. On the ramp from the delivery room to the vehicle a mechanical moving floor can be fitted which can lead the animal on to or off the vehicle even though the animal is standing still. The delivery room can also be used as a receiving room with all the functions in reverse.
With such equipment the animals can be loaded very rapidly with equipment the animals are accustomed to, therefore the behavior and the stress level will be normal. At the same time the time needed for loading e.g. 240 slaughter pigs can be reduced with about 80 % without the need for any farm personnel to be present. The driver of the vehicle can activate and manoeuvre all of the equipment from the delivery room.

### Prior art

The above-mentioned problems are especially significant when housing large herds of free-range animals in stables, especially pigs. When they grow very rapidly and only are kept in the house for approx. eight to ten weeks it requires a fast learning of the individual animal, with a frequent separation of pigs for slaughtering. The problem occurred when we started to use our patented feeding robot for large herds of pigs. It is known that there has been a previous use of a so called "cow driver" to drive cows towards the automated milking machine but that is from an area in front of the machine where the cows are driven manually before the milking starts. When all the cows are at place the entrance gate is closed and by using an electrical wire, which mechanically is moved forward, the cows are driven to the milking equipment.

But this construction requires that the animals be driven manually from their places in the stable and to the gathering point.

### Description of the present invention

The present invention relates in a first aspect to an arrangement for breeding of animals in a herd, comprising an enclosed area of a size sufficient to house the animals of the herd, crowding means suitable for automatically sweeping the entire enclosed area so as to crowd all animals present within the enclosed area towards one or more separation means for separating selected animals from the herd and into a separation enclosure and wherein said separation means comprises weighing means for determining a weigh of the individual animal and perform the separation accordingly.

The arrangement of the present invention may have an enclosed area which is suitable to house a herd of animals comprising at least 100 animals, preferably at least 300 animals, such as within the range of 500 to 2000 animals, and the feeding means are suitable for feeding said number of animals, which preferably is pigs.

The crowding means are preferably arranged to halt the operation during the sweeping of the enclosed area in case the crowding means affects an object within the enclosed area with a force exceeding a predefined maximum force and to produce a warning signal accordingly.

The arrangement may have control means suitable to operate the crowding means so that all animals within the enclosed area are crowded towards said separation means.

The present invention furthermore relates to the use of an arrangement as described above for breeding of a herd of animals, preferably of pigs, wherein said herd preferably comprises at least 100 animals, most preferred at least 300 animals, such as within the range of 500 to 2000 animals.

### Embodiments of the present invention

A suggestion for the crowding equipment could be a rail or a strip suspended in the buildings walls or steal beams where a tram is assembled which go on the rail driven by an electrical motor. This electrical motor is controlled by a frequency converter to ensure the possibility for controlling the torque on the driving arm. On this tram these forward driving arms could be assembled.

If an animal for some reason will not move, e.g. because it is injured, dead, sleeping or sick, the forward driving arm automatically stops when the torque exceeds the set limit, then backs a little and try again for a number of times. If it is not possible to proceed, it sends an alarm to the personnel on call. This driving equipment will go at a speed that is equivalent to the feeding, weighing or separation equipments capacity.

An example: The feeding robot has 20 feeding spaces; each animal has an eating period of six minutes. The speed of the carrousel of the robot is rotations per hour, which gives a capacity of 200 animals per hour. With 800 animals in the herd we need four hrs. to get all the animals through. If the length of the house is 40 meters long the driving equipment needs to move with approx. 18 meters/hrs. when going to the end turning and moving up towards the feeding equipment. When it after 4 hrs. has reached the entrance of the feeding robot all the animals have passed through for either feeding or separation for sale or other purpose. The animals which have been fed come out behind the driving equipment. The driving arm must now pass the feeding robot and the arm tilts by using an air cylinder so the tram can pass the robot on its course back to starting position. The start position for the driving equipment is by a door out to the delivery room. As the Danish law for protection of animals demands that the animals have poking material it is possible to, on the same equipment for driving animals, fit a box for straw or other equipment for poking material. On the same tram used for driving the animals, equipment to lift out dead animals can be assembled. This equipment must be manufactured in a way so it is possible for the animals to reach the poking material everywhere in the stable. This could also be for transporting persons or other equipment. The different kind of equipment assembled on the driving tram is manufactured in a way so all are permanently fitted but can be turned or twisted e.g. when the driving function is in use the box for straw is lifted up for preventing the pigs to eat of the straws. The speed of which the equipment goes is different depending on what function is in use. When the box for straw is in use the speed can be different as well as the equipment can go in both directions.

It is a very work-demanding task to drive the animals from the separation unit in the automatically individual feeding or weighing equipment. This task can be handled automatically by assembling a mechanically construction on the path from the separation exit to the entrance of the delivery room which drives the animal forward into the delivery room. This mechanical construction can e.g. be a chain assembled with fittings which are pressed against the rear end of the animals and thereby drive the animals forward as well as prevent the animal from going backwards. This construction is e.g. controlled by the robot because the robot's programmed control unit knows exactly when an animal is separated and can at the same time start this function. The fitting on the chain can automatically be tilted when going backwards.

It is a very work-demanding task to drive the animals from the delivery room into the vehicle transporting the animals to the receiver, the vehicle will normally be a lorry and the receiver will normally be the slaughterhouse. Ethically it is very inappropriate to mix the animals from different herds and it is very difficult to drive the animals, especially slaughtering pigs, from the delivery rooms exit to the entrance of the lorry. There are several reasons for this, the intensity of light is normally very low in this area as well as the pigs has to go up on the ramp which is against their instincts. Therefore it is a difficult task to load these slaughtering pigs and it is very normal that the amount of pigs is up to 240 pieces in one lorry. To get the animals quickly on to the lorry equipment are often used that is unethical.

As we in the previous mentioned controlling software in e.g. the feeding robot knows when and how many animals to be separated you can divide the delivery room in compartments in fitting sizes, e.g. how the lorry is equipped. For slaughtering pigs you will usually divide the room with compartments of 15 animals. By using a mechanically hauling system with compartments that can be moved you can fill all the compartments with e.g. 15 pigs. When the compartment is full you move it forward or backwards and the next compartment is ready to be filled. The control of these compartments is coordinated with the separation of the feeding or weighing equipment. The delivery compartments can be small trams as well moving on rails.

At the exit of the delivery room and up to the entrance of the lorry there is a moving floor. When the animals slowly are being driven from the moving delivery room and on to the ramp with the moving floor, the animals are automatically moved on board the lorry even though they may be going backwards because of the constant flow of more animals. The handling of both the moving compartment separators and the moving floor on the ramp is made by the driver. He is the only one present and he who decide the loading speed. As the animals are used to the mechanical gates and compartment separators from the feeding equipment the level of stress is very low.

This system will especially be suited for night transportation because the driver can use all of the equipment alone. An example: There is a delivery of 240 slaughtering pigs on the slaughterhouse in Horsens at 04.00 am. Pick up in Auning at Djursland. At 09.00 pm. the driving equipment is programmed to start so all the pigs has been through the feeding robot after 4 hrs. At 01.30 am all the animals have been through the feeding robot, the 240 slaughtering pigs have been separated to the delivery room. At 01.30 am the lorry starts loading the animals. At 02.00 am the lorry leaves Auning to go to Horsens, a transportation time of 2 hrs. With arrival in Horsens at 04.00 am the pigs can be slaughtered as the first ones that day. By using this handling method a great advantage ethically, for the working environment and economically can be achieved.

### Short description of figures:

### Figure 1:

1. Mounting of rail for driving arm/basket for poking material/lifting equipment etc.
2. Feeding robot or equipment for automatically individually feeding or weighing.
3. Separation path for delivery room.
4. Delivery room, with mechanically compartments separators.
5. Mechanically moving path separator.
6. Delivery ramp with a mechanically moving floor.
7. Entrance at feeding robot or equipment for automatically individually feeding or weighing.
8. Exit from feeding robot or equipment for automatically individually feeding or weighing.
9. Tram for driving arm/basket for poking material/lifting equipment etc.
10. Driving arm.

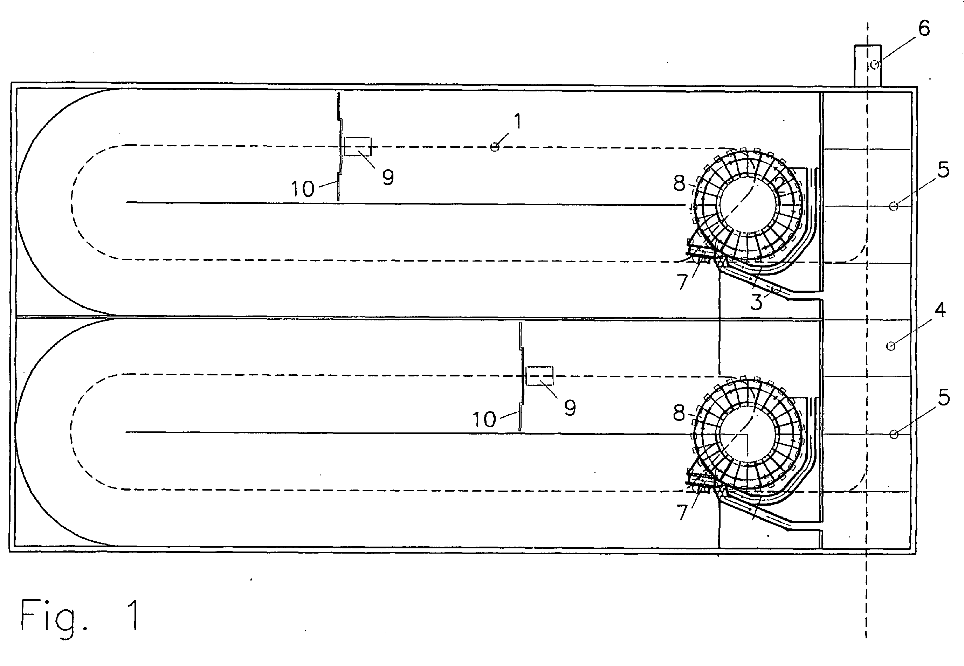

## Claims

1. Arrangement for breeding of animals in a herd, comprising a separation enclosure (4), separation means (7) for separating selected animals from the herd and into the separation enclosure, a feeding enclosure for feeding of an animal of the herd, an enclosed area of a size sufficient to house the animals of the herd and crowding means suitable for automatically sweeping the entire enclosed area so as to crowd all animals present within the enclosed area towards the separation means, wherein the separation means comprises weighing means for determining a weigh of the individual animal to perform the separation accordingly and at least two outlets one leading directly to the separation enclosure and the other leading directly to the feeding enclosure (2).

2. Arrangement according to claim 1, wherein the enclosed area is suitable to house a herd of animals comprising at least 100 animals, preferably at least 300 animals, such as within the range of 500 to 2000 animals, and the arrangement comprises feeding means suitable for feeding said number of animals.

3. Arrangement according to any of the preceding claims, wherein said animals are pigs.

4. Arrangement according to any of the preceding claims, wherein the crowding means are arranged to halt the operation during the sweeping of the enclosed area in case the crowding means affects an object within the enclosed area with a force exceeding a predefined maximum force and to produce a warning signal accordingly.

5. Arrangement according to any of the preceding claims, wherein the arrangement has control means suitable to operate the crowding means so that all animals within the enclosed area are crowded towards said separation means.

6. Use of an arrangement according to any of claims 1-5 for breeding of a herd of animals, preferably of pigs.

7. Use according to claim 6, wherein said herd comprises at least 100 animals, preferably at least 300 animals, such as within the range of 500 to 2000 animals.

## Patentansprüche

1. Vorkehrungen zur Aufzucht von Tieren in einer Herde mit einem Trenngehege 4, mit Trennbereichen 7 zur Trennung von ausgewählten Tiere aus der Herde, die im Trenngehege untergebracht werden, ein Füttergehege zum Füttern der Herdentiere, ein umzäunter Bereich, der ausreichend groß ist, um die Herdentiere unterzubringen und Sammelmöglichkeiten für das automatische Auskehren des gesamten umzäunten Bereiches, damit alle Tiere im umzäunten Bereich zu den Trennbereichen gedrängt werden können. In den Trennbereichen gibt es Wiegevorrichtungen zur Gewichtsbestimmung einzelner Tiere, um eine entsprechende Trennung vorzunehmen und schließlich zwei Ausgänge, einer führt dabei direkt zum Trenngehege und der andere führt direkt zum Füttergehege 2.

2. Vorkehrungen gemäß Forderung 1, dabei können im umzäunten Bereich eine Herde mit mindestens 100 Tieren, vorzugsweise mindestens 300 Tiere, z. B. 500 bis 2000 Tiere, untergebracht werden und die Vorkehrung umfasst Füttermöglichkeiten zum Füttern der besagten Anzahl an Tieren.

3. Vorkehrungen gemäß den vorangehenden Forderungen. Dabei handelt es sich bei den besagten Tieren um Schweine.

4. Vorkehrungen gemäß den vorangehenden Forderungen, wobei die Sammelbereiche so geschaffen sind, dass während dem Auskehren des umzäunten Bereiches der Betrieb aufrecht erhalten werden kann, wenn es in den Sammelbereichen Auswirkungen auf ein Objekt im Trennbereich gibt und die davon ausgehende Kraft größer als eine vorab definierte Maximalkraft ist, so dass ein entsprechendes Warnsignal abgegeben werden kann.

5. Vorkehrungen gemäß den vorangehenden Forderungen, wobei es auch Kontrollmittel gibt, die für den Betrieb der Sammelbereiche angemessen sind, damit alle Tiere innerhalb des umzäunten Bereiches zum Trennbereich gedrängt werden können.

6. Die Vorkehrungen gemäß den Forderungen 1-5 werden zur Aufzucht einer Tierherde, vorzugsweise von Schweinen, verwendet.

7. Verwendung gemäß Forderung 6, wobei die besagte Herde mindestens 100, vorzugsweise mindestens 300 Tiere, z. B. 500 bis 2000 Tiere, umfasst.

## Revendications

1. Installation pour l'accouplement des animaux dans un troupeau, composée d'un enclos de séparation 4, de dispositifs de séparation 7, pour séparer les animaux sélectionnés du troupeau et à l'intérieur de l'enclos de séparation, un enclos d'engraissement pour nourrir un animal du troupeau, un enclos de taille suffisante pour abriter les animaux du troupeau et des dispositifs de rassemblement, permettant de balayer automatiquement la totalité de l'enclos, dans le but de regrouper tous les animaux de l'enclos et de les diriger vers les dispositifs de séparation, dans lesquels figurent des dispositifs de pesée pour déterminer le poids d'un animal et effectuer ainsi les séparations de manière appropriée, et d'au moins deux sorties, une directement orientée vers l'enclos de séparation et l'autre directement orientée vers l'enclos d'engraissement 2.

2. Installation conformément à la revendication 1, dans laquelle l'enclos permet d'abriter un troupeau d'animaux comptant au moins 100 bêtes et, de préférence, au moins 300 bêtes, soit un nombre compris entre 500 et 2 000 animaux, et l'installation inclut des dispositifs d'engraissement permettant de nourrir ledit nombre d'animaux.

3. Installation conformément à l'une quelconque des revendications précédentes, dans laquelle lesdits animaux sont des cochons.

4. Installation conformément à l'une quelconque des revendications précédentes, dans laquelle les dispositifs de rassemblement sont disposés de telle sorte à stopper le balayage de l'enclos, au cas où un dispositif de rassemblement entre en contact avec un objet présent dans l'enclos, avec une force supérieure à une force maximale définie et à émettre, par conséquent, un signal d'avertissement.

5. Installation conformément à l'une des revendications précédentes, dans laquelle l'installation est équipée de dispositifs de contrôle, permettant d'actionner les dispositifs de rassemblement, afin que tous les animaux de l'enclos soient regroupés et dirigés vers les dispositifs de séparation.

6. Utilisation d'une installation conformément à l'une quelconque des revendications 1 à 5 pour l'engraissement d'un troupeau d'animaux, de préférence des cochons.

7. Utilisation conformément à la revendication 6, dans laquelle ledit troupeau compte au moins 100 animaux et, de préférence, au moins 300 animaux, soit un nombre compris entre 500 et 2 000 animaux.
